# EUROPEAN PATENT APPLICATION

(11) **EP 1 205 662 A2**
(43) Date of publication of application: **15.05.2002**
(21) Application number: 01890307.0
(22) Date of filing: 07.11.2001
(51) Int. Cl.: F03D 7/02, F03D 9/00

(54) **Windmill having speed-sensitive control system**

(30) Priority: 07.11.2000 US 155
(71) Applicant: Kraml, Johann, 4201 Gramastetten (AT)
(72) Inventor: Kraml, Johann, 4201 Gramastetten (AT)

(57) **Abstract**

A windmill for converting wind energy into electrical power and supplying it to a power grid, comprising a blade assembly, a generator housing, and a main shaft operatively coupled between the blade assembly and generator housing. The generator housing contains a first generator having a first generator output and a second generator having a second generator output. A hydraulic strut supports the generator housing and allows angular adjustment thereof. A hydraulic pump selectively pressurizes the hydraulic strut to effect adjustment thereof. A braking system is selectively actuable to slow rotation of the main shaft. A flyweight assembly and a four position speed sensing switch together detect rotational speed of the main shaft, selectively connect the generators with the main shaft, and selectively activate the braking system and hydraulic pump as appropriate according to the speed detected by the speed sensing switch.

## Description

### BACKGROUND OF THE INVENTION

The invention relates to a windmill having a speed-sensitive control system. More particularly, the invention relates to a windmill which is configured so as to make greatest use of available wind energy while increasing durability by reducing wear and tear which ordinarily occurs from high speed operation.

Although utilization of wind energy has taken place for hundreds, if not thousands of years, only recently has cost effective large-scale generation of electric power been within reach. With the increasing concern over the cost and depletion of fossil fuel resources, effective solutions with regard to harnessing wind power are being demanded by scientists, politicians, and consumers.

Currently, windmill generated electric power cannot compete with hydroelectric, nuclear, and fossil fuel based generation systems if compared on a cost basis alone. The primary reason is the cost of manufacturing and installing a new windmill. Typically then, one would expect that the cost of even an expensive windmill could be recouped, given enough time. However, current windmills are limited in durability, and thus fail long before they can generate enough electricity to pay for themselves.

One of the major causes of windmill failure is unusually high wind velocity. High wind velocity causes increased stress on windmill blades and other components, and increases the speed of the windmill rotation. When windmill rotation speed exceeds design specifications, internal stresses and inertia can cause vibration throughout the windmill which will drastically cut its useful life. In severe wind situations, the windmill can even fail.

Accordingly, in order to increase the durability of a windmill, the key area to focus upon seems to be speed management. In other words, configuring the windmill to either better withstand high blade velocities, or to reduce velocity - even in the face of strong winds.

Others have sought to provide solutions to the problem of limited windmill durability and limited ability to withstand high winds, by promulgating alternative windmill designs. While these units may be suitable for the particular purpose employed, or for general use, they would not be as suitable for the purposes of the present invention as disclosed hereafter.

### SUMMARY OF THE INVENTION

It is an object of the invention to provide a windmill which is configured so as to have a long useful life. Accordingly, the windmill is configured to reduce the wear and tear normally encountered by windmills spinning at high rotational speeds resulting from unusually strong winds.

It is another object of the invention to provide a windmill which reacts to varying wind conditions. Accordingly, the windmill senses the windspeed, and takes appropriate action in response thereto. The windmill employs a flyforce system which is operatively engaged with the main shaft of the windmill, the flyforce system operating a speed sensing four position switch in response to changes in rotational speed of the main shaft. The action taken, according to the status of the speed sensing four position switch either increases power output of the windmill, or takes steps to lower the blade speed.

It is a further object of the invention to provide a windmill which makes greatest use of available wind energy to produce the greatest possible power output. Accordingly, the speed sensing system acts to engage the generator with the power grid when sufficient speed is present, and may act to engage a secondary generator when a further increase in speed warrants the use of the secondary generator.

It is yet a further object of the invention to provide a windmill which acts to reduce the blade speed when high winds are present. Accordingly when the speed sensing switch detects an unsuitably rapid blade velocity, the blades are steered by a hydraulic system slightly away from the wind to slow down the blades. If the speed sensing switch detects an even greater velocity, a braking system is engaged to slow or stop the blade rotation.

The invention is a windmill for converting wind energy into electrical power and supplying it to a power grid, comprising a blade assembly, a generator housing, and a main shaft operatively coupled between the blade assembly and generator housing. The generator housing contains a first generator having a first generator output and a second generator having a second generator output. A hydraulic strut supports the generator housing and allows angular adjustment thereof. A hydraulic pump selectively pressurizes the hydraulic strut to effect adjustment thereof. A braking system is selectively actuable to slow rotation of the main shaft. A fleeweight assembly and a four position speed sensing switch together detect rotational speed of the main shaft, selectively connect the generators with the main shaft, and selectively activate the braking system and hydraulic pump as appropriate according to the speed detected by the speed sensing switch.

To the accomplishment of the above and related objects the invention may be embodied in the form illustrated in the accompanying drawings. Attention is called to the fact, however, that the drawings are illustrative only. Variations are contemplated as being part of the invention, limited only by the scope of the claims.

### BRIEF DESCRIPTION OF THE DRAWINGS

In the drawings, like elements are depicted by like reference numerals. The drawings are briefly described as follows.
FIG 1 is a diagrammatic side view, illustrating various components of the windmill.
FIG 2 is a block diagram, illustrating interconnection of various components of the windmill and associated speed sensing mechanisms.

### DETAILED DESCRIPTION OF THE PREFERRED EMBODIMENTS

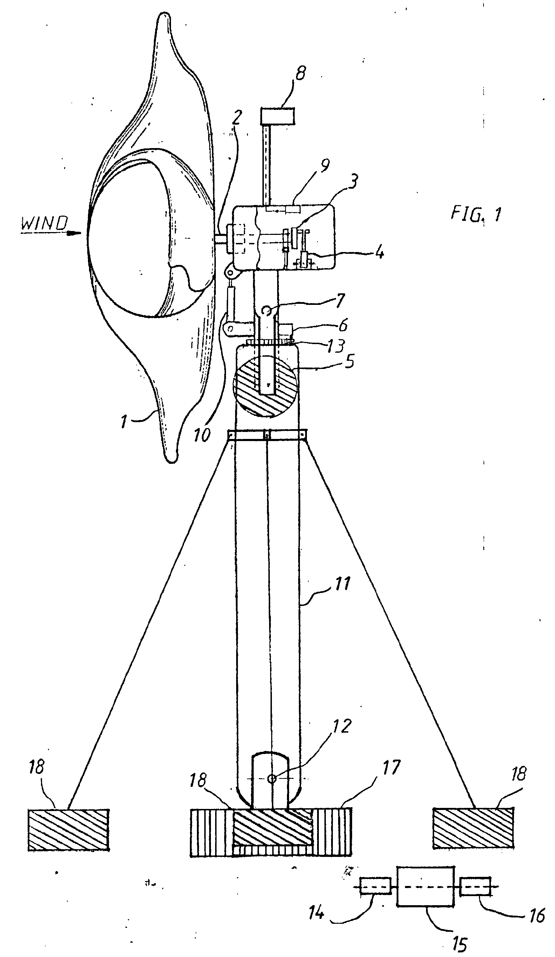

FIG 1 illustrates a windmill 10, having a mast 12, and a generator housing 14 mounted thereupon with a swivel joint 16. A blade assembly 18 is operatively connected to the generator housing 14 with a main shaft 20. The generator housing 14 contains two generators coaxially linked to the main shaft 20, including a first generator, having a first generator output 21, and a second generator, having a second generator output 22. The windmill 10 supplies energy to a power grid 25. Typically numerous windmills 10 are connected to said power grid 25 which allows distribution of electricity to electrical consumers in a manner which is well known, and is thus beyond the scope of the present discussion.

The generator housing 14 is angularly braced with a hydraulic strut 50 which allows angular adjustment of the generator housing 14 and thus the blade assembly 18. Accordingly, the generator housing 14 typically extends horizontally, and the blade assembly 18 typically extends vertically. However, the hydraulic strut 50 allows angular adjustment varying from said typical positions. Like a hydraulic shock absorber, the hydraulic strut 50 has an internal cavity into which hydraulic fluid may be pumped in order to alter its load bearing ability, and thus alter its position. An hydraulic fluid pump 52 is connected to the hydraulic strut 50 by a hydraulic line 54. A braking system 60 is also provided, which is electrically operated, and acts to slow the main shaft 20 either directly, or indirectly by steering the entire generator housing 14 away from the wind.

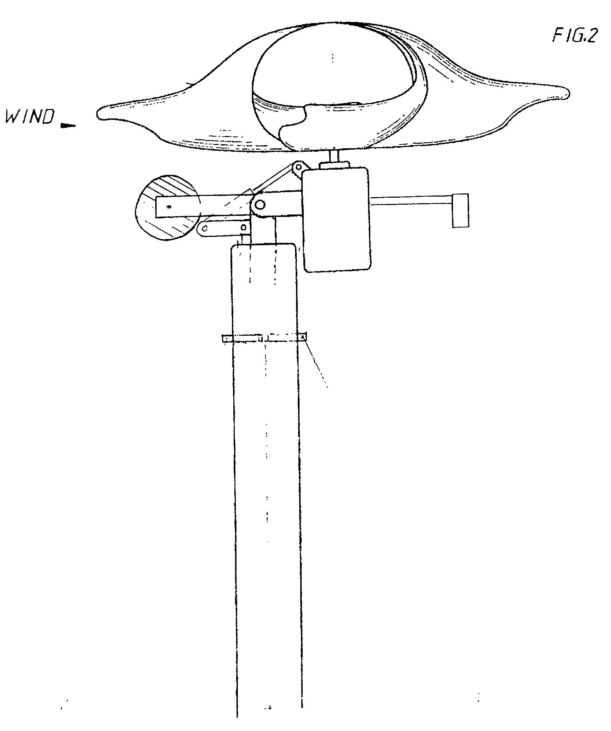

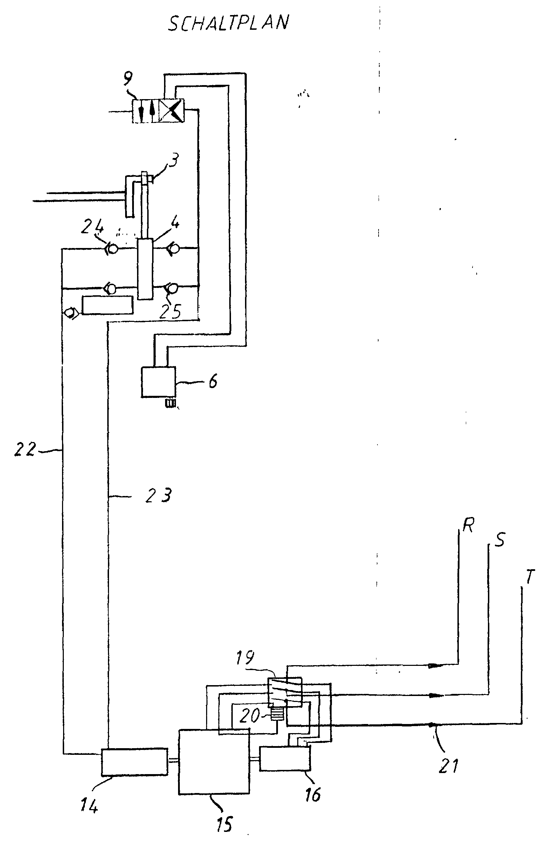

A fleeforce assembly 30 is operatively coupled to the main shaft 20, fully opposite from the blade assembly 18. Referring to FIG 2, a four position speed sensing switch 40 is located adjacent to the fleeforce assembly 30. The speed sensing switch 40 has a housing 41 and a plunger 42 movable to four different positions with respect to the housing. The fleeforce assembly 30 has a fleeforce plate 32 which is capable of contacting the plunger 42 of the speed sensing switch 40 and altering the selected position of said speed sensing switch 40. The fleeforce plate 32 is positioned in accordance with the rotational speed of the main shaft 20 in a manner which will be described hereinafter. Accordingly, the position of the speed sensing switch 40 is thereby dependent on the rotational speed of the main shaft 20.

The fleeforce assembly 30 comprises a cross bar coupler 33 having a pair of cross bar ends 34. The fleeforce assembly 30 also comprises a pair of fleeweights 36 which are each pivotally attached at one of the cross bar ends 34. Each fleeweight 36 comprises a major arm 37 and a minor arm 38 which are joined at an elbow 39. The major arms 37 are oriented away from each other, and the minor arms 38 are oriented toward each other. The cross bar coupler 33 is attached onto the main shaft 20 and spins therewith. As the main shaft 20 spins, centrifugal force causes the major arms 37 to pivot outward, which in turn causes the minor arms to pivot outward and press upon the fleeforce plate 32. As the main shaft 20 spins faster, the minor arms 38 push the fleeforce plate 32 further toward the speed sensing switch 40. The fleeforce plate 32 may be biased toward the fleeforce assembly 30 and away from the plunger 42 with a fleeforce assembly spring 31. Accordingly, as the main shaft 20 slows down, the fleeforce assembly spring 31 helps restore the fleeforce plate 32 toward the generator housing 14 and away from the switch 40.

Referring to FIG 2, the four position switch 40 has a position one output 401, a position two output 402, a position three output 403, and a position four output 404. The four position speed sensing switch 40 operates such that when in its first position, the position one output 401 is enabled. However, when the switch 40 is in its second position, the position one output 401 and the position two output 402 are enabled. Further, when the switch 40 is in its third position, the position one output 401, the position two output 402, and the position three output 403 are enabled. Still further, when the switch 40 is in its fourth position, the position one output 401, the position two output 402, the position three output 403, and the position four output 404 are enabled.

A first relay 501 is controlled by the position one output 401. A second relay 502 is controlled by the position two output 402. A third relay 503 is controlley by the position three output 403. A fourth relay 504 is controlled by the position four output 404. Each of the relays have an open position and a closed position.

The first relay 501 selectively connects the first generator output with the power grid 25. The second relay 502 selectively connects the second generator output 22 with the power grid 25. The third relay 502 selectively connects the hydraulic pump 52 with a general power source 80. The fourth relay 504 selectively connects the braking system 60 with said general power source. The general power source is any power source capable of reliably supplying sufficient power to operate the hydraulic pump and the braking system. The general power source may be one or both of the generator outputs, may be the power grid, or may be a storage battery.

During operation then, at a relatively low rotational speed of the main shaft 20, the switch 40 will be in a first position. When the switch 40 is in the first position, the position one output 401 is enabled, and the first relay 501 is thereby closed, connecting the first generator output 21 with the power grid 25. Accordingly, wind power is harnessed by the blade assembly 18, is converted to electricity by the first generator, and is tendered to the power grid 25.

As increased wind force causes the rotational speed of the main shaft 20 to increase, the fleeforce assembly 30 increases pressure upon the fleeforce plate 32 which moves the plunger 42 to put the switch 40 into its second position. When the switch 40 is in its second position, the position two output 402 is enabled, and the second relay 502 is closed, connecting the second generator output 22 with the power grid 25. Accordingly additional electricity is generated by the second generator, and is tendered to the power grid 25.

If the wind force causes the rotational speed of the main shaft to increase to an undesirably high level, the fleeforce assembly continues to increase pressure upon the fleeforce plate 32 and moves the plunger 42 so as to put the switch 40 in its third position. When the switch 40 is in the third position, the position three output 403 is enabled, and the third relay is closed 503, connecting the hydraulic pump with the general power source 80. Accordingly, hydraulic fluid is pressurized by the hydraulic pump 52, and is fed to the hydraulic strut 50, causing the strut to expand in length, thus pitching the blade assembly 18 upward. Preferably the movement of the blade assembly 18 brings the blades into position which causes the blade assembly 18 and thus the main shaft 20 to slow down. Meanwhile, both generators continue generating electric power and supplying the same to the power grid 25. The hydraulic strut 50 can be configured so that it typically rests in an optimum position when unpressurized, and that it slowly bleeds hydraulic fluid until it reaches its optimum position. Accordingly, after a high rotation speed situation has been dealt with, the hydraulic strut 50 will slowly automatically bring the blade assembly 18 back into optimum position.

If the wind force continues to increase, the resulting increased rotation of the main shaft can be detrimental to the windmill. Accordingly, slowing the blade assembly becomes of critical importance. At this point, the fleeforce assembly 30 will have brought the switch 40 into its fourth position. When the switch 40 is in its fourth position, the position four output 404 is enabled, and the fourth relay 504 is closed, connecting the braking system 60 with the general power source 80. The braking system 60 operates to slow the windmill operation. If the braking system 60 is configured to directly slow the main shaft, then some oscillation may naturally occur as the main shaft is repeatedly slowed by the braking system such that the braking system is disengaged, then sped up again by the wind - causing the braking system to re-engage. Hopefully, if the extreme rotational speed is caused by a momentary gust, then no such oscillation of the braking system will occur.

In conclusion, herein is presented a windmill system which responds to increased wind velocity and corresponding increases in windmill component rotation by various actions which seek to increase utilization of wind energy, and to decrease damage caused by excessive wind speeds.

It should be noted that the invention is illustrated by example in the accompanying drawings figures, and throughout the discussion. Howeve it should be appreciated that innumerable variations may be promulgated while adhering to the inventive principles. Such variations are contemplated as being a part of the present invention.

## Claims

1. A windmill, for supplying electrical energy to a power grid, comprising:
a blade assembly;
a main shaft connected to the blade assembly;
a generator housing, coaxially mounted upon the main shaft, having a first generator operatively coupled with the main shaft and providing a first generator output in response to rotation thereof;
a hydraulic strut supporting the generator housing and capable of altering the position of the generator housing and blade assembly;
a hydraulic pump, operable to supply hydraulic fluid to the hydraulic strut;
a speed sensitive switch, responsive to rotational speed of the main shaft, for selectively connecting the first generator output to the power grid at a relatively low rotational speed, and selectively activating the hydraulic pump at a relatively higher rotational speed to alter the position of the generator housing and blade assembly to slow rotation of the main shaft.

2. The windmill as recited in claim 1, further comprising a braking system which is operable to slow the main shaft, wherein the speed sensitive switch selectively activates the braking system at a relatively higher rotational speed than that necessary to activate the hydraulic pump.

3. The windmill as recited in claim 2 further comprising a second generator, also located in the generator housing and operatively engaged with the main shaft so as to produce a second generator output in response to rotation thereof, the speed sensitive switch selectively causing the second generator output to be connected to the power grid at a relatively higher rotational speed than that necessary to connect the first generator output to the power grid.

4. The windmill as recited in claim 3, further comprising a fleeforce assembly, operatively coupled with the main shaft, the fleeforce assembly including:
a cross bar coupler having a pair of cross bar ends, the cross bar coupled to the main shaft midway betwen the cross bar ends,
a pair of fleeweights, each fleeweight having a major arm and a minor arm which are joined at an elbow, each fleeweight is pivotally connected at the elbow to one of the cross bar ends, and
a pressure plate in contact with the minor arms on one side and the switch on an opposite side thereof; and
wherein as the main shaft spins, the major arms move outward, pressing the minor arms against the pressure plate and thereby operating the switch.

5. The windmill as recited in claim 4, wherein the switch is a four position switch, having a first position, a second position, a third position, a fourth position, the switch having a housing, a plunger movable within said housing to select one of said positions, a position one output, a position two output, a position three output, and a position four output; wherein the position one output is enabled when the switch is in any of the four positions; the position two output is enabled when the switch is in any of the second, third, and fourth positions; the position three output is enabled when the switch is in any of the third and fourth positions; and wherein the position four output is enabled when the switch is in the fourth position.

6. The windmill as recited in claim 5, further comprising a first relay, a second relay, a third relay, and a fourth relay, each of the relays having open and closed positions, wherein:
the first relay is controlled by the position one output, the first relay selectively connecting the first generator output with the power grid;
the second relay is controlled by the position two output, the second relay selectively connecting the second generator output with the power grid;
the third relay is controlled by the position three output, the third relay selectively connects the hydraulic pump with a general power source; and
the fourth relay is controlled by the position four output, the fourth relay selectively connects the braking system with said general power source.
